# EUROPÄISCHE PATENTSCHRIFT

(11) **EP 2 314 894 B1**
(45) Veröffentlichungstag und Bekanntmachung des Hinweises auf die Patenterteilung: **12.11.2014**
(21) Anmeldenummer: 10177756.3
(22) Anmeldetag: 21.09.2010
(51) Int. Cl.: F16D 23/04, F16D 23/06

(54) **Synchronisiereinrichtung**
Synchronising device
Dispositif de synchronisation

(30) Priorität: 23.10.2009 DE 102009050525
(43) Veröffentlichungstag der Anmeldung: 27.04.2011
(73) Patentinhaber: Schaeffler Technologies GmbH & Co. KG, 91074 Herzogenaurach (DE)
(72) Erfinder: Filges, Stefan, 33803, Steinhagen (DE); Folk, Rudolf, 96152, Burghaslach (DE)

(56) Entgegenhaltungen:
- EP-A1- 0 204 664
- EP-A1- 1 310 692
- EP-A1- 2 090 796
- JP-A- H1 082 431

## Beschreibung

### Gebiet der Erfindung

Die Erfindung betrifft eine Synchronisiereinrichtung für Schaltgetriebe.

### Hintergrund der Erfindung

Bekannte handgeschaltete Getriebe weisen Synchronisiereinrichtungen auf, um das Wechseln der einzelnen Schaltstufen zu erleichtern. Beim Schaltvorgang wird mittels verschiedener Elemente der Synchronisiereinrichtung die Umfangsgeschwindigkeit eines Gangrades der Umfangsgeschwindigkeit der Getriebewelle angepasst und dann eine formschlüssige Verbindung zwischen der Getriebewelle und diesem Gangrad hergestellt. Der Synchronkörper ist dabei ein wichtiger Bestandteil der Synchronisiereinrichtung. Durch den Synchronkörper sind die Getriebewelle und die Schiebemuffe der Synchronisiereinrichtung drehfest miteinander verbunden. Das erfolgt in der Regel dadurch, dass der Synchronkörper einerseits in Umfangsrichtung formschlüssig über ein an seiner Nabe ausgebildetes Keilprofil oder Verzahnungsprofil mit der Getriebewelle verbunden ist, und andererseits über eine Außenverzahnung seines Muffenträgers die Schiebemuffe an seinem Außendurchmesser entlang der Längsmittelachse der Getriebewelle verschiebbar aufnimmt. Es ist in Schaltgetrieben üblich, die Synchronisiereinrichtung auf der Getriebewelle zwischen zwei Gangrädern anzuordnen. Über eine Synchronisiereinrichtung kann demzufolge wahlweise das links von dieser Synchronisiereinheit angeordnete Gangrad oder das rechts von dieser Synchronisiereinrichtung angeordnete Gangrad formschlüssig mit der Getriebewelle verbunden werden. Der Synchronkörper muss konstruktiv so ausgebildet sein, dass die auf ihm angeordnete Schiebemuffe axial nach links und rechts verschoben werden kann und dass z. B. bei einer Doppelkonussynchronisation an beiden Seiten die Mitnehmernocken des inneren Synchronringes formschlüssig geführt werden können. Da in der Regel das linke und das rechte Gangrad gleich ausgeführte Anschlusselemente aufweisen, ist auch der Synchronkörper in der Regel symmetrisch ausgebildet. In bestimmten Fällen ist aber die Schiebemuffe, bezogen auf eine Ebene senkrecht zur axialen Richtung, asymmetrisch gestaltet, z.B. für einen unterschiedlichen Verzahnungseingriff beim ersten Gang, wie z.B. in der EP 02 04 664 A1 gezeigt. In diesem Fall muss die Schiebemuffe in axial richtiger Orientierung montiert werden.

### Aufgabe der Erfindung

Der vorliegenden Erfindung liegt die Aufgabe zugrunde, eine Synchronisiereinrichtung für ein Schaltgetriebe anzugeben, bei dem eine Montage einer in axialer Richtung asymmetrisch gestalteten Schiebemuffe fehlerfrei möglich ist.

### Zusammenfassung der Erfindung

Die Aufgabe wird erfindungsgemäß gelöst durch Angabe einer Synchronisiereinrichtung für ein Schaltgetriebe, umfassend einen auf einer Getriebewelle drehfest montierbaren Synchronkörper und eine auf den Synchronkörper bezogen auf die Getriebewelle in axialer Richtung aufschiebbare und mit dem Synchronkörper über eine Verzahnung mechanisch wechselwirkende Schiebemuffe, wobei die Schiebemuffe bezogen auf eine Ebene senkrecht zur Getriebewelle asymmetrisch aufgebaut ist und somit eine erste Stirnseite und eine davon verschiedene, gegenüberliegende zweite Stirnseite aufweist sowie entlang einer Mittelachse gerichtet ist, wobei ein mechanischer Eingriff von Schiebemuffe und Synchronkörper so gestaltet ist, dass ein Aufschieben der Schiebemuffe auf den Synchronkörper je nach Schieberichtung entlang der Mittelachse nur entweder mit der ersten oder mit der zweiten Stirnseite mög-l ich ist.

Die Erfindung geht von der Erkenntnis aus, dass eine Fehlmontage durch ein Verdrehen der asymmetrischen Schiebemuffe relativ zum Synchronkörper zu erheblichem Mehraufwand und Kosten führen kann. Tatsächlich zeigt sich, dass ein fertigungstechnischer Mehraufwand zur Sicherstellung der Vermeidung einer Fehlmontage gerechtfertigt ist, obwohl zunächst z.B. eine optische Kennzeichnung der verschiedenen Seiten der Schiebemuffe als ausreichend erscheinen muss. Die Erfindung schlägt somit erstmals vor, durch einen angepassten mechanischen Eingriff eine Fehlmontage auszuschließen.

Vorzugsweise ist der mechanische Eingriff in der Verzahnung durch eine Aussparung und einen mit der Aussparung korrespondierenden Blockzahn gebildet, wobei der Blockzahn größer ist, als ein Zahn der Verzahnung. Der mechanische Eingriff kann somit vergleichsweise einfach durch eine eher geringfügige Anpassung der Verzahnung sichergestellt werden.

Bevorzugt ist zwischen Schiebemuffe und Synchronkörper eine Soll-Winkelposition vorgegeben, in der die Schiebemuffe und der Synchronkörper zueinander in Umfangsrichtung orientiert sein müssen, damit die Schiebemuffe auf den Synchronkörper aufschiebbar ist, wobei eine Ausgangswinkelposition des mechanischen Eingriffs relativ zu zur Soll-Winkelposition so gewählt ist, dass der mechanische Eingriff bei einem Verdrehen der Schiebemuffe um 180 Grad um eine senkrecht durch ihre Mittelachse gedachten Achse mit der Ausgangswinkelposition nicht mehr in Deckung ist, obwohl die Soll-Winkelposition eingehalten bleibt.

Weiter bevorzugt ist die Soll-Winkelposition durch eine Rastiereinrichtung vorgegeben, durch die die Schiebemuffe und der Synchronkörper miteinander verrastbar sind. Vorzugsweise weist dabei die Rastiereinrichtung drei zueinander um 120 Grad versetzte Rastierstellen aufweist. Bevorzugtermaßen ist der mechanische Eingriff aus drei über den Umfang der Schiebemuffe und des Synchronkörpers verteilten Eingriffsstellen gebildet, wobei mindestens einer der zwischen den drei Eingriffstellen gebildeten Winkel kleiner als 120 Grad ist.

### Kurze Beschreibung der Zeichnungen

Die Erfindung wird anhand von Ausführungsbeispielen näher erläutert. Es zeigen:
- Figur 1:: eine Schiebemuffe in einer Aufsicht,
- Figur 2:: eine Schiebemuffe in einem Längsschnitt,
- Figur 3:: einen Synchronkörper in einer Aufsicht,
- Figur 4:: eine schematische Darstellung einer Synchronisiereinrichtung.

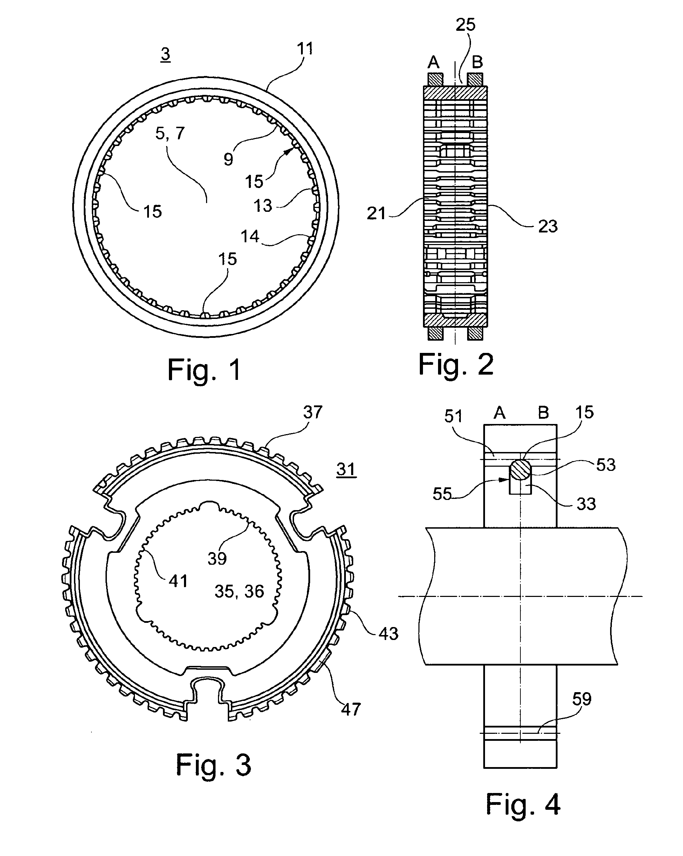

Figur 1 zeigt eine Schiebemuffe 3. Die Schiebemuffe 3 ist ringförmig um eine durch einen Mittelpunkt 5 führende Mittelachse 7 aufgebaut. Die Schiebemuffe 3 weist eine Innenseite 9 und eine Außenseite 11 auf. auf der Innenseite 9 ist eine Muffenverzahnung 13 angeordnet. Die Muffenverzahnung 13 ist aus Zähnen 14 gebildet. In Umfangsrichtung um jeweils 120 Grad versetzt weist die Muffenverzahnung 13 Rastierstellen 15 als Vertiefungen auf, in die nicht dargestellte, mittels Federn angedrückte und in Rastnuten 33 (siehe Figur 3) geführte Rastmittel 53 (siehe Figur 4) eingreifen können. Weiterhin ist in der Muffenverzahnung 13 eine Aussparung 17 gebildet. Die Aussparung 17 ist in Umfangsrichtung relativ zur Winkellage der Rastierstellen 15 so angeordnet, dass sich für sie eine veränderte Winkellage ergibt, wenn die Schiebemuffe 3 um eine beliebige Achse senkrecht zur Mittelachse 7 um 180 Grad gedreht wird.

Figur 2 zeigt einen Längsschnitt durch die Schiebemuffe 3. Schematisch ist angedeutet, dass die Muffenverzahnung 13 asymmetrisch aufgebaut ist, d.h. dass sich die Muffenverzahnung in einem ersten Bereich A angrenzend an eine erste Stirnseite 21 von der Verzahnung in einem zweiten Bereich B angrenzend an die zweite Stirnseite 23 unterscheidet. Figur 2 zeigt auch eine an der Außenseite 11 entlang des Umfangs geformte Nut 25, in die ein Schalthebel zur axialen Verschiebung der Schiebemuffe 3 eingreifen kann.

Figur 3 zeigt einen Synchronkörper 31, auf den die Schiebemuffe 3 in axialer Richtung aufschiebbar ist. Der Synchronkörper 31 ist auch ringförmig um einen durch einen Synchronkörpermittelpunkt 35 führende Synchronkörpermittelachse 36 aufgebaut. Der Synchronkörper 31 weist eine Synchronkörperaußenseite 37 und eine Synchronkörperinnenseite 39 auf. Auf der Synchronkörperinnenseite 39 ist eine Innenverzahnung 41 gebildet, über die der Synchronkörper 31 fest mit einer nicht dargestellten Getriebewelle verbindbar ist, die sich im montierten Zustand entlang der Synchronkörpermittelachse 37 erstreckt. Auf der Synchronkörperaußenseite 37 ist eine Synchronkörperverzahnung 43 aus Synchronkörperzähnen 45 gebildet, die mit der Muffenverzahnung 13 korrespondiert und wodurch die Verzahnung 51 der Synchronisiereinrichtung 1 gebildet wird (siehe Figur 4). Radial nach außen führend sind im Synchronkörper 31 Rastnuten 33 gebildet, in denen Rastmittel 53 geführt werden, die in die als Vertiefungen in der Muffenverzahnung 13 angeordneten Rastierstellen 15 eingreifen. Die Rastierstellen 15 sind zueinander um 120 Grad versetzt am Umfang angeordnet. Hierdurch ergibt sich in Umfangsrichtung eine Soll-Winkelposition, in der die Schiebemuffe 3 auf den Synchronkörper 31 aufzuschieben ist. Entsprechend der 120 Grad Verteilung kommen die Rastierstellen 15 mit den Rastnuten 33 nur bei drei Winkellagen zur Deckung. Die Rastierstellen 15 bilden mit den Rastnuten 33 und den Rastmitteln 53 eine Rastiereinrichtung 55. Weiterhin weist die Synchronkörperverzahnung 43 einen Blockzahn 47 auf, der größer ist, als die Synchronkörperzähne 45. Der Blockzahn 47 korrespondiert mit der Aussparung 17 der Schiebemuffe 3. Hierdurch wird ein mechanischer Eingriff 59 gebildet (siehe Figur 4). Der mechanische Eingriff 59 ist nunmehr in seiner Lage und Symmetrie so gewählt, dass er ein Aufschieben der Schiebemuffe 3 auf den Synchronkörper 31 nur in einer festgelegten Orientierung der Stirnseiten 21, 23 zulässt. Mit anderen Worten, die Aussparung 17 kommt mit dem Blockzahn 47 nur dann zur Deckung, wenn die Schiebemuffe 3 bezogen auf ihre Stirnseiten 21, 23 in einer vorgegeben Richtung zum Synchronkörper 31 orientiert ist. Im vorliegenden Beispiel ist hierzu die Aussparung 17 und der Blockzahn 47 nicht symmetrisch zur Verteilung der Rastiereinrichtung 55 angeordnet. Bei einer Drehung der Schiebemuffe 3 um eine zur Mittelachse 7 senkrechten Achse um 180 Grad kann somit zwar die Soll-Winkelposition in Umfangsrichtung aufgrund der 120 Grad Verteilung der Rastiereinrichtung 55 eingestellt werden, der mechanische Eingriff 59 wird aber nicht zur Deckung gebracht und verhindert ein Aufschieben der Schiebemuffe 3. Somit ist ausgeschlossen, dass die asymmetrisch ausgeführte Schiebemuffe 3 mit einer falschen Orientierung montiert wird.

### Bezugszahlenliste

- 1: Synchronisiereinrichtung
- 2: -
- 3: Schiebemuffe
- 4: -
- 5: Mittelpunkt
- 6: -
- 7: Mittelachse
- 8: -
- 9: Innenseite
- 10: -
- 11: Außenseite
- 12: -
- 13: Muffenverzahnung
- 14: Zähne
- 15: Rastierstellen
- 16: -
- 17: Aussparung
- 21: Stirnseite
- 22: -
- 23: Stirnseite
- 24: -
- 25: Nut
- 31: Synchronkörper
- 32: -
- 33: Rastnuten
- 34: -
- 35: Synchronkörpermittelpunkt
- 36: Synchronkörpermittelachse
- 37: Synchronkörperaußenseite
- 38: -
- 39: Synchronkörperinnenseite
- 40: -
- 41: Innenverzahnung
- 42: -
- 43: Synchronkörperverzahnung
- 44: -
- 45: Synchronkörperzähne
- 46: -
- 47: Blockzahn
- 51: Verzahnung
- 52: -
- 53: Rastmittel
- 59: Eingriff

## Patentansprüche

1. Synchronisiereinrichtung für ein Schaltgetriebe, umfassend einen auf einer Getriebewelle drehfest montierbaren Synchronkörper und eine auf den Synchronkörper bezogen auf die Getriebewelle in axialer Richtung aufschiebbare und mit dem Synchronkörper über eine Verzahnung mechanisch wechselwirkende Schiebemuffe, wobei die Schiebemuffe bezogen auf eine Ebene senkrecht zur Getriebewelle asymmetrisch aufgebaut ist und somit eine erste Stirnseite und eine davon verschiedene, gegenüberliegende zweite Stirnseite aufweist sowie entlang einer Mittelachse gerichtet ist, **dadurch gekennzeichnet, dass** ein mechanischer Eingriff von Schiebemuffe und Synchronkörper durch eine Aussparung und einen mit der Aussparung korrespondierenden Blockzahn gebildet ist, wobei der Blockzahn größer ist, als ein Zahn der Verzahnung, so dass ein Aufschieben der Schiebemuffe auf den Synchronkörper je nach Schieberichtung entlang der Mittelachse nur entweder mit der ersten oder mit der zweiten Stirnseite möglich ist.

2. Synchronisiereinrichtung nach Anspruch 1, bei der zwischen Schiebemuffe und Synchronkörper eine Soll-Winkelposition vorgegeben ist, in der die Schiebemuffe und der Synchronkörper zueinander in Umfangsrichtung orientiert sein müssen, damit die Schiebemuffe auf den Synchronkörper aufschiebbar ist, wobei eine Ausgangswinkelposition des mechanischen Eingriffs relativ zu zur Soll-Winkelposition so gewählt ist, dass der mechanische Eingriff bei einem Verdrehen der Schiebemuffe um 180 Grad um eine senkrecht durch ihre Mittelachse gedachten Achse mit der Ausgangswinkelposition nicht mehr in Deckung ist, obwohl die Soll-Winkelposition eingehalten bleibt.

3. Synchronisiereinrichtung nach Anspruch 2, bei der die Soll-Winkelposition durch eine Rastiereinrichtung vorgegeben ist, durch die die Schiebemuffe und der Synchronkörper miteinander verrastbar sind.

4. Synchronisiereinrichtung nach Anspruch 3, wobei die Rastiereinrichtung drei zueinander um 120 Grad versetzte Rastierstellen aufweist.

5. Synchronisiereinrichtung nach Anspruch 4, wobei der mechanische Eingriff aus drei über den Umfang der Schiebemuffe und des Synchronkörpers verteilten Eingriffsstellen gebildet ist, wobei die jeweils zwischen den Eingriffstellen und den Rastierstellen gebildeten Winkel nicht alle gleich sind.

## Claims

1. Synchronizing device for a gear-shrift transmission, comprising a synchronous body mountable fixedly in terms of rotation on a transmission shaft and a sliding sleeve which can be pushed onto the transmission shaft in the axial direction with respect to the synchronous body and interacts mechanically with the synchronous body visa a tooting, the sliding sleeve being constructed asymmetrically with respect to a plane perpendicular to the transmission shaft and therefore having a first end face and a second end face different from and opposite to the latter and also being directed along a mid-axis, **characterized in that** a mechanical engagement of the sliding sleeve and synchronous body is formed by a clearance and a block tooth acting with the clearance, the block tooth being larger than a tooth of the toothing, so that, depending on the sliding direction along the mid-axis, it is possible for the sliding sleeve to be pushed onto the synchronous body only either with the first or with the second end face.

2. Synchronizing device according to Claim 1, in which, between the sliding sleeve and the synchronous body, a desired angular position is stipulated, in which the sliding sleeve and the synchronous body have to be oriented with respect to one another in the circumferential direction, so that the sliding sleeve can be pushed onto the synchronous body, an initial angular position of mechanical engagement in relation to the desired angular position being selected such that, when the sliding sleeve is rotated 180 degrees about an imaginary axis running perpendicularly through its mid-axis, mechanical engagement is no longer congruent with the initial angular position, although the desired angular position is preserved.

3. Synchronizing device according to Claim 2, in which the desired angular position is stipulated by a latching device, by means of which the sliding sleeve and the synchronous body can be latched with one another.

4. Synchronizing device according to Claim 3, the latching device having three latching points offset at 120 degrees to one another.

5. Synchronizing device according to Claim 4, mechanical engagement being formed from three engagement points distributed over the circumference of the sliding sleeve and of the synchronous body, the angles formed in each case between the engagement points and the latching points not all being equal.

## Revendications

1. Dispositif de synchronisation pour une transmission à changement de vitesses, comprenant un corps de synchronisation pouvant être monté de manière solidaire en rotation sur un arbre de transmission et un manchon coulissant pouvant être poussé sur le corps de synchronisation par rapport à l'arbre de transmission dans la direction axiale et coopérant mécaniquement avec le corps de synchronisation par le biais d'une denture, le manchon coulissant étant construit de manière asymétrique par rapport à un plan perpendiculaire à l'arbre de transmission et présentant ainsi un premier côté frontal et un deuxième côté frontal opposé, différent de celui-ci, et étant orienté le long d'un axe médian, **caractérisé en ce qu'**un engagement mécanique du manchon coulissant et du corps de synchronisation est réalisé par un évidement et une dent de blocage correspondant à l'évidement, la dent de blocage étant plus grande qu'une dent de la denture, de sorte qu'une poussée du manchon coulissant sur le corps de synchronisation ne soit possible en fonction du sens de poussée le long de l'axe médian qu'avec soit le premier soit le deuxième côté frontal.

2. Dispositif de synchronisation selon la revendication 1, dans lequel entre le manchon coulissant et le corps de synchronisation est prédéfinie une position angulaire de consigne dans laquelle le manchon coulissant et le corps de synchronisation doivent être orientés l'un par rapport à l'autre dans la direction périphérique afin que le manchon coulissant puisse être poussé sur le corps de synchronisation, une position angulaire de départ de l'engagement mécanique par rapport à la position angulaire de consigne étant choisie de telle sorte que l'engagement mécanique dans le cas d'une rotation du manchon coulissant de 180 degrés autour d'un axe imaginaire perpendiculaire à son axe médian ne soit plus en coïncidence avec la position angulaire de départ bien que la position angulaire de consigne reste conservée.

3. Dispositif de synchronisation selon la revendication 2, dans lequel la position angulaire de consigne est prédéfinie par un dispositif d'encliquetage qui permet d'encliqueter l'un avec l'autre le manchon coulissant et le corps de synchronisation.

4. Dispositif de synchronisation selon la revendication 3, dans lequel le dispositif d'encliquetage présente trois positions d'encliquetage décalées les unes par rapport aux autres de 120 degrés.

5. Dispositif de synchronisation selon la revendication 4, dans lequel l'engagement mécanique est formé de trois positions d'engagement réparties sur la périphérie du manchon coulissant et du corps de synchronisation, les angles formés à chaque fois entre les positions d'engagement et les positions d'encliquetage n'étant pas tous les mêmes.
